# EUROPÄISCHE PATENTSCHRIFT

(11) **EP 1 402 189 B1**
(45) Veröffentlichungstag und Bekanntmachung des Hinweises auf die Patenterteilung: **17.05.2006**
(21) Anmeldenummer: 02747425.3
(22) Anmeldetag: 24.06.2002
(51) Int. Cl.: F16B 5/02, F16B 5/08, F16B 35/04

(54) **BEFESTIGUNGSELEMENT UND VERFAHREN ZU SEINER HERSTELLUNG SOWIE VERWENDUNG**
FIXING ELEMENT AND METHOD FOR THE PRODUCTION AND USE THEREOF
ELEMENT DE FIXATION ET PROCEDE DESTINE A SA REALISATION ET A SON UTILISATION

(30) Priorität: 02.07.2001 DE 10131510
(43) Veröffentlichungstag der Anmeldung: 31.03.2004
(73) Patentinhaber: Newfrey LLC, Newark, Delaware 19711 (US)
(72) Erfinder: KORTMANN, Hans-Gerhard, 38159 Vechelde (DE); SCHNEIDER, Joachim, 35630 Ehringshausen-Katzenfurt (DE)
(74) Vertreter: Haar, Lucas Heinz Jörn
(86) Internationale Anmeldenummer: PCT/EP2002/006952
(87) Internationale Veröffentlichungsnummer: WO 2003/004883

(56) Entgegenhaltungen:
- EP-A- 0 761 985
- DE-C- 4 024 042
- US-A- 5 393 164

## Beschreibung

Die Erfindung betrifft ein Befestigungselement, insbesondere zur Fixierung wenigstens eines flächenförmigen Bauteils in einem Abstand zu einem Trägerteil und ein Verfahren zu seiner Herstellung sowie eine Verwendung.

Aus z.B. wartungs- oder sicherheitstechnischen Gründen ist es bei verschiedenen Anwendungen notwendig, dass die Wand eines Containers oder ein Karosseriebauteil möglichst umfassend kapselbar ist oder mit einem Bauteil verkleidet wird, z.B. mit einer feuerfesten Wand, die verhindert, dass infolge einer hohen thermischen Belastung, z.B. eines Brandes, das jeweilige Trägerteil einer entsprechenden sicherheitsgefährdenden vorzeitigen Alterung unterliegt. Eine solche feuerfeste Wand besteht vorzugsweise aus einem nicht entflammbaren Material, wobei es unerheblich ist, ob diese Wand starr, strukturiert oder flexibel ausgeführt ist. Dabei stellt sich das Problem, dass eine geeignete Befestigung des Bauteils an den zum Teil sehr komplex geformten Trägerteilen erforderlich ist. Bekannt sind Befestigungsmittel, die sich zum Teil durch das Trägerteil hindurch erstrecken, wobei jedoch diese ggf. als Wärmebrücken zu dem durch das Trägerteil abgegrenzten Raum hindurch fungieren.

Bekannte Befestigungsmittel werden deshalb zumeist nach der sog. Buckelschweißtechnik am Träger angeschweißt und weisen aufgrund der punktartigen Verbindung nur eine begrenzte Übertragung von z.B. Drehmomenten auf. Weiterhin erfordert diese Schweißtechnik eine Gegenkraftstruktur und damit eine Zugänglichkeit von zwei Seiten des Trägerteils zur Befestigung des Befestigungsmittels.

Aus US-A-5 393 164 ist eine Schweißverbindung zwischen einem aus Blech bestehenden Träger, einem daran zu befestigenden Bauteil, beispielsweise einem Blechstreifen und einem Schweißteil bekannt. Das Bauteil liegt hierbei auf dem Träger auf und hat zu diesem keinen Abstand. Das Schweißteil mit einem Kopfende in eine Bohrung des Bauteils eingesetzt, so daß beim Verschweißen des Schweißteils mit dem Träger auch der Rand der Bohrung des Bauteils geschmolzen und das Bauteil mit den beiden anderen Teilen verschweißt wird. Die stirnseitige Befestigungsfläche des Schweißteils wird hierbei vollständig verschweißt. In einer Ausführung bildet das Kopfende des Schweißteils eine Auflagefläche, die kleiner ist als die Befestigungsfläche.

Hiervon ausgehend ist es Aufgabe der Erfindung, ein Befestigungselement anzugeben, das zur beabstandeten Fixierung bzw. Lagerung wenigstens eines Bauteils, z.B. einer feuerfesten Wand, an einem Trägerteil geeignet ist. Insbesondere soll die Befestigung des Befestigungselementes an dem Trägerteil nur von einer Seite her erfolgen. Zudem soll eine Montage auch mehrerer, z.B. dünner Bauteile, erleichtert und weitgehend frei von der Einhaltung von Lagertoleranzen ermöglicht sein. Weiterhin soll ein Verfahren sowie eine Verwendung für ein derartiges Befestigungselement angegeben werden.

Diese Aufgabe wird gelöst durch ein Befestigungselement mit den Merkmalen des Anspruchs 1 und Verfahren zu seiner Herstellung gemäß den Merkmalen des Anspruchs 13 oder 14. Weiterhin ist eine Verwendung mit den Merkmalen des Anspruchs 15 angegeben. Weitere vorteilhafte Ausgestaltungen der Erfindung, welche einzeln oder in Kombination miteinander eingesetzt werden können, sind Gegenstand der jeweils abhängigen Ansprüche.

Das erfindungsgemäße Befestigungselement, insbesondere zur Fixierung wenigstens eines flächenförmigen Bauteils in einem, insb. definierbaren bzw. definierten, Abstand zu einem Trägerteil, umfasst ein Basisteil, welches eine Auflagefläche und eine Befestigungsfläche hat, und einen Schaft, der an der Auflagefläche des Basisteils anordenbar und zur Fixierung des flächenförmigen Bauteils geeignet ist, wobei die Befestigungsfläche kleiner als die Auflagefläche ist. Die Auflagefläche bietet dabei die Möglichkeit, dass das flächenförmige Bauteil an einer verhältnismäßig großen Fläche anliegt, was insbesondere für dünne Bleche vorteilhaft ist und auch die Montage von Bauteilen mit Lochversatz nicht zwingend ausschließt.

Das Basisteil ist vorzugsweise aus einem metallischen Material, wobei die Auflagefläche und die Befestigungsfläche bevorzugt auf gegenüberliegenden Seiten des Befestigungselementes angeordnet sind.

Das Befestigungselement wird mit seiner Befestigungsfläche bevorzugt am Träger angeschweißt. Bei einer Anwendung auf dünne Bleche erfolgt dabei in vorteilhaf ter Weise eine Versteifung der Schweißstelle. Der ringförmige Flansch weist zudem den Vorteil auf, dass er sich mit einem deutlich geringerem Energieverbrauch verschweißen lässt, als die Verschweißung von gattungsgemäßen Befestigungselementen nach dem bekannten Buckelschweißverfahren. Insbesondere der Verzicht auf die Schweißbuckel, d.h. auf punktartige Verbindungen, erlaubt in vorteilhafter Weise die Übertragung auch hoher Drehmomente und setzt, im Gegensatz zur notwendigen Gegenkraftstruktur beim Buckelschweißverfahren, in vorteilhafter Weise lediglich eine einseitige Zugänglichkeit voraus. Damit sind auch die Investitionskosten mitunter deutlich geringer als beim bekannten Buckelschweißen.

Gemäß einer bevorzugten Ausgestaltung des Befestigungselements ist die Auflagefläche rotationssymmetrisch und weist einen Durchmesser auf, wobei die Befestigungsfläche ringförmig ausgeführt ist. Dabei ist es besonders vorteilhaft, dass die ringförmige Befestigungsfläche einen Innendurchmesser und einen Außendurchmesser hat, wobei der Außendurchmesser der ringförmigen Befestigungsfläche dem Durchmesser der Auflagefläche entspricht. Die rotationssymmetrische Ausgestaltung des Befestigungselementes hilft in vorteilhafter Weise insbesondere Montagefehler hinsichtlich des Basisteils zu vermieden. Durch die Ausgestaltung des Basisteils mit einem konstanten Außendurchmesser bzw. Durchmesser ist eine zylindrische Außenform des Basisteils gewährleistet, welche insbesondere im Hinblick auf geeignete Aufnahmen bei Zuführeinrichtungen wie beispielsweise Robotern gewählt werden kann.
Alternativ dazu wird vorgeschlagen, dass die Befestigungsfläche als ein Polygon ausgeführt ist, wobei sich eine polygonähnliche Außenkontur des Basisteils ergibt. Derartig ausgebildete Befestigungselemente eignen sich insbesondere zur Verwendung als Verdrehschutz für weitere Anbauteile und zur Aufnahme bzw. Verarbeitung mit einer Schweißpistole.

Gemäß einer weiteren Ausgestaltung ist die Befestigungsfläche kleiner als 80%, insbesondere kleiner als 70%, bevorzugt kleiner als 65% der Auflagefläche ausgeführt. Für den oben dargestellten Fall, dass das Basisteil eine ringförmige Befestigungsfläche aufweist, hat dies zur Folge, dass im Inneren des Basisteils ein relativ großer Hohlraum gebildet wird. Die Befestigungsfläche ist dabei dennoch so groß, dass die Justierung und die Befestigung des Basisteils auf dem Trägerteil dauerhaft gewährleistet ist.

Gemäß noch einer weiteren Ausgestaltung hat das Basisteil in Richtung seiner Symmetrieachse eine Höhe, die zwischen 3 und 10 mm beträgt. Bevorzugt ist dabei eine solche Ausgestaltung, dass das Basisteil ausgehend von der Befestigungsfläche über mindestens 20%, insbesondere mindestens 40%, bevorzugt mindestens 50% der Höhe einen Querschnitt bzw. eine Querschnittsfläche aufweist, die kleiner als die Auflagefläche ist. Die Höhe des Basisteils definiert im wesentlichen den Abstand, den das flächenförmige Bauteil im montierten Zustand zu dem Trägerteil aufweist. Der angegebene prozentuale Bereich, in dem das Basisteil gegenüber der Auflagefläche eine reduzierte Querschnittsfläche aufweist, bestimmt im wesentlichen die Höhe des gebildeten Hohlraumes bei einer ringförmig ausgestalteten Befestigungsfläche. Dieser Anteil ist dabei so zu wählen, dass einerseits möglichst wenig Material zur Herstellung des Basisteils benötigt wird, andererseits die Stabilität und Festigkeit der Auflagefläche nicht beeinträchtigt werden.

Gemäß einer weiteren Ausgestaltung ist das Befestigungselement modular, insbesondere zweistückig aufgebaut. Dies bedeutet beispielsweise, dass das Basisteil und der Schaft erst in einem Montageschritt miteinander verbunden werden. Dies erhöht in vorteilhafter Weise einerseits die Flexibilität der Ausgestaltung eines solchen Befestigungselementes und erlaubt zudem unterschiedliche Varianten, wie das flächenförmige Bauteil an der Auflagefläche des Basisteils fixiert bzw. geklemmt wird.

Gemäß noch einer weiteren Ausgestaltung sind Mittel zur Positionierung des Schaftes auf der Auflagefläche des Basisteils vorhanden, wobei der Schaft mit dem Basisteil vorzugsweise fügetechnisch verbunden ist. Derartige Mittel zur Positionierung sind beispielsweise Ausnehmungen, Kanten, Anschläge und dergleichen, die vorzugsweise im wesentlichen dem Querschnitt des Schaftes entsprechen. Damit wird auch eine vollautomatische Positionierung des Schaftes bezüglich des Basisteils unterstützt, was insbesondere im Hinblick auf eine Serien- oder Massenfertigung vorteilhaft ist.

Gemäß noch einer weiteren Ausgestaltung weist der Schaft eine Stoßfläche auf, die kleiner als 50%, insbesondere kleiner als 45%, bevorzugt kleiner 40% der Auflagefläche ist. Insbesondere bei der Anordnung des Schaftes koaxial zur Auflagefläche des Basisteils wird derart gewährleistet, dass auch nach der Befestigung des Schaftes über seine Stoßfläche auf dem Basisteil eine ausreichend große Auflagefläche vorhanden ist, die eine stabile Anlage des flächenförmigen Bauteils beabstandet zu dem Trägerteil vorhanden ist.

Gemäß noch einer weiteren Ausgestaltung weist der Schaft Mittel zur Fixierung eines flächenförmigen Bauteils auf. Dabei ist es besonders vorteilhaft, dass der Schaft mindestens eine Erhebung aufweist, die sich zumindest teilweise radial auswärts erstreckt, wobei die mindestens eine Erhebung vorzugsweise umlaufend als Raststufe oder Gewinde ausgeführt ist. Solche Raststufen dienen beispielsweise dazu, dass mit deren Hilfe das flächenförmige Bauteil gegen die Auflagefläche gedrückt und quer zur Auflagefläche fixiert wird. Die Raststufe oder das Gewinde kann jedoch auch dazu verwendet werden, dass ein zusätzliches Spannelement an dem Schaft befestigt wird, welches im montierten Zustand das flächenförmige Bauteil gegen die Auflagefläche des Basisteils drückt. Hierzu seien beispielhaft Tannenbaumstrukturen, Muttern, sich durch den Schaft hindurch erstreckende Querstifte etc. angeführt.

Gemäß einem weiteren Aspekt der Erfindung werden Verfahren zur Herstellung des zuvor beschriebenen Befestigungselementes angegeben, insbesondere eines, bei dem zunächst das Basisteil mit der Auflagefläche und der im Vergleich zu dieser kleineren Befestigungsfläche nach einem urformenden oder umformenden und/oder einem spanenden Festigungsverfahren hergestellt und der Schaft anschließend mit der Auflagefläche des Basisteils fügetechnisch verbunden wird. Als urformendes Fertigungsverfahren kommen insbesondere Gießverfahren oder Extrudierverfahren in Frage. Im Hinblick auf umformende Fertigungsverfahren seien hier beispielhaft das Druckumformen oder das Freiformen aufgeführt.

Besonders bevorzugt ist ein Verfahren zur Herstellung einstückiger Befestigungselemente durch ein Massivumformen, wie beispielsweise einem Drück- oder Pressverfahren.

Alternativ oder kumulativ zu den genannten Ur- bzw. Umformtechniken wird vorgeschlagen, dass vorzugsweise das Basisteil oder das Befestigungselement insgesamt durch mindestens ein spanendes Fertigungsverfahren hergestellt wird, wobei es beispielsweise in der Art erfolgen kann, dass das Basiselement mit einer vorgebbaren Höhe von einem rotationssymmetrischen oder polygonähnlichen Rohmaterial abgetrennt wird (beispielsweise durch Sägen) und anschließend der reduzierte Querschnitt nahe der Befestigungsfläche mittels Bohren oder Drehen hergestellt wird. Insbesondere bieten sich als spanende Fertigungsverfahren auch Endbearbeitungsverfahren wie beispielsweise Schleifen an.

Der Schaft ist dabei vorzugsweise als Stiftschraube, Schweißbolzen oder dergleichen ausgeführt. Bei einer modularen Bauweise des Befestigungselementes können beispielsweise auch unterschiedliche Materialien hinsichtlich des Schaftes und des Basisteils eingesetzt werden, wobei in vorteilhafter Weise auch Materialien mit unterschiedlichen Wärmeleitfähigkeiten eingesetzt und so ein etwaiger Wärmeübergang von der feuerfesten Wand hin zum Trägerteil möglichst reduziert werden können.

Dabei ist es besonders vorteilhaft, wenn der Schaft mit dem Basisteil verschweißt wird. Dies stellt eine dauerhafte Verbindung des Schaftes mit dem Basisteil auch bei hohen thermischen und dynamischen Beanspruchungen sicher.

Das erfindungsgemäße Befestigungselement wird vorzugsweise zur Kapselung sicherheitsrelevanter Aggregate durch Fixierung wenigstens eines Bauteils, z.B. einer nicht entflammbaren Wand, in einem vorgebbaren Abstand zu einem Trägerteil verwendet, insbesondere bei der Ausführung des Trägerteils aus einem metallischen Material. Das Trägerteil stellt dabei insbesondere eine Behälterwand oder ein Karosseriebauteil dar.

Die Erfindung wird nachfolgend anhand der Zeichnungen näher erläutert, wobei diese lediglich vorteilhafte und besonders bevorzugte Ausführungsformen darstellen. Die Erfindung ist nicht auf die dargestellten Ausführungsformen beschränkt.

Es zeigen schematisch:
- Fig. 1: eine Schnittansicht einer ersten Ausführungsform des Befestigungselementes im montierten Zustand eines dickwandigen Bauteils;
- Fig. 2: im Schnitt eine zweite Ausführungsform des Befestigungselementes;
- Fig. 3: im Schnitt die Ausführungsform nach Fig. 1 im montierten Zustand eines dünnwandigen Bauteils;
- Fig. 4: im Schnitt die Ausführungsform nach Fig. 1 im montierten Zustand zweier dünnwandiger Bauteile;
- Fig. 5: einen Schnitt durch die in Fig. 2 dargestellte Ausführungsform des Befestigungselementes;
- Fig. 6: eine schematische und perspektivische Darstellung eines Basisteils;
- Fig. 7: eine schematische und perspektivische Darstellung des Befestigungselementes; und
- Fig. 8: den Kräfteverlauf über den Querschnitt eines angeschweißten Befestigungselementes.

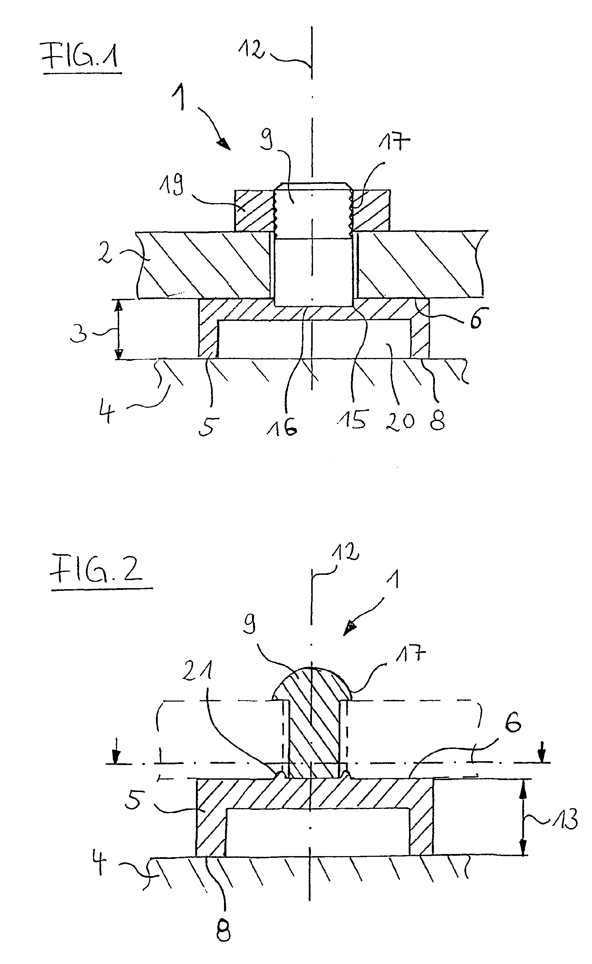

Fig. 1 zeigt in einer Schnittansicht eine erste Ausführungsform eines Befestigungselementes 1, das insbesondere zur Fixierung eines flächenförmigen, beispielsweise dickwandigen, Bauteils 2 in einem Abstand 3 zu einem Trägerteil 4 geeignet ist. Das Befestigungselement 1 umfasst ein Basisteil 5, welches eine Auflagefläche 6 und eine Befestigungsfläche 8 hat. Das Befestigungselement 1 umfasst weiterhin einen Schaft 9, der an der Auflagefläche 6 des Basisteils 5 angeordnet ist und zur Fixierung des flächenförmigen Bauteils dient. In der dargestellten Ausführungsform weist das Befestigungselement 1 eine Auflagefläche 6 auf, die rotationssymmetrisch ist. Die Befestigungsfläche 8 ist kleiner als die Auflagefläche 6 ausgeführt, wobei in Fig. 1 eine ringförmige Ausgestaltung der Befestigungsfläche 8 dargestellt ist. Die ringförmige Ausgestaltung der Befestigungsfläche 8 hat zur Folge, dass im Inneren des Basisteils 5 ein Hohlraum 20 gebildet wird. Die Befestigungsfläche 8 ist dabei kleiner als 65% der Auflagefläche 6 ausgeführt.

Das Befestigungselement 1 ist hier zudem vorzugsweise modular aufgebaut und umfasst neben dem Basisteil 5 und dem Schaft 9 eine Mutter 19, welche mittels eines an dem Schaft 9 befindlichen Gewindes 17 ermöglicht, dass das flächenförmige Bauteil 2 gegen die Auflagefläche 6 gepresst wird. Somit ist ein dauerhafter Halt des flächenförmigen Bauteils 2 in einer beabstandeten 3 Position zu dem Trägerteil 4 gewährleistet. Der Schaft 9 ist koaxial zu der Achse 12 in einer Ausnehmung 15 des Basisteils 5 angeordnet. Der Schaft 9 weist weiterhin eine Stoßfläche 16 auf, welche kleiner als 40% der Auflagefläche ist.

Fig. 2 zeigt eine alternative Ausführungsform des erfindungsgemäßen Befestigungselementes 1. Das Basisteil 5 ist in seinem montierten Zustand wiederum über die Befestigungsfläche 8 mit dem Trägerteil 4 fügetechnisch verbunden, insbesondere verschweißt. Die Höhe 13 des Basisteils 15 definiert dabei gleichzeitig den Abstand 3, der bezüglich einer gestrichelt dargestellten, z.B. feuerfesten, Wand 2 zum Trägerteil 4 eingehalten wird. Zur erleichterten Positionierung des Schafts 9 koaxial zu dem Basisteil 5 weist dieses auf der Auflagefläche 6 eine Kante 21 auf, die im wesentlichen der Außenkontur des Schafts 9 entspricht. Auf der dem Basisteil 5 abgewandten Seite weist der Schaft 9 eine Erhebung 17 auf, die so gestaltet ist, dass das gestrichelt dargestellte flächenförmige Bauteil gegen die Auflagefläche 6 des Basisteils 5 gedrückt und somit fixiert wird. Diese Erhebung 17 erstreckt sich dabei radial auswärts und ist umlaufend ausgebildet, wobei eine gleichmäßige Krafteinleitung in die anliegenden Bereiche des flächenförmigen Bauteils gewährleistet ist.

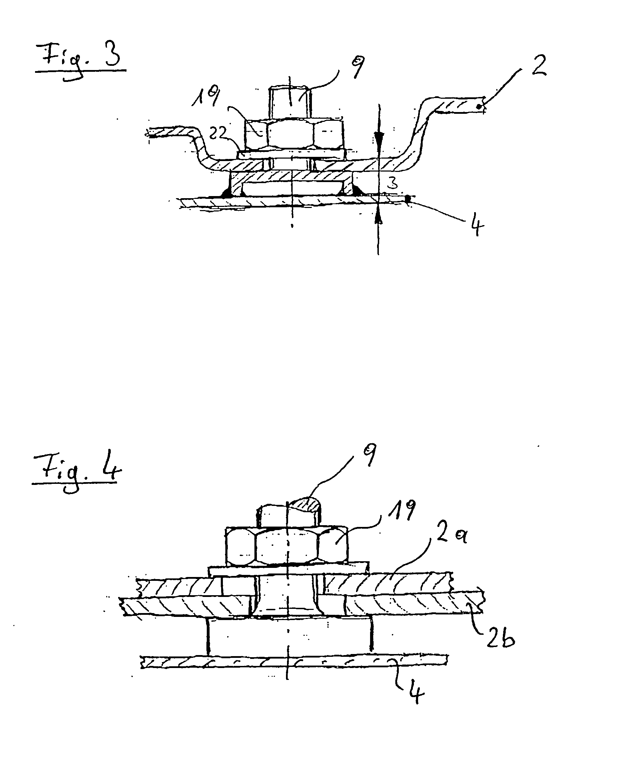

Fig. 3 zeigt im Schnitt die Ausführungsform nach Fig. 1 im montierten Zustand eines dünnwandigen Bauteils 2, welches 2 beispielsweise wie dargestellt auch strukturiert sein kann. Zum Schutz des dünnenwandigen Bauteils 2 ist zwischen einer Mutter 19 und dem Bauteil 2 eine Unterlegscheibe 22 angeordnet. Das Befestigungselement 1 selbst ist ansonsten wie zuvor beschrieben ausgebildet, erlaubt also in vorteilhafter Weise die Befestigung eines Anbauteils 2 zu einem Schweißteil 4 in einem vorgebbaren, definierten Abstand 3.

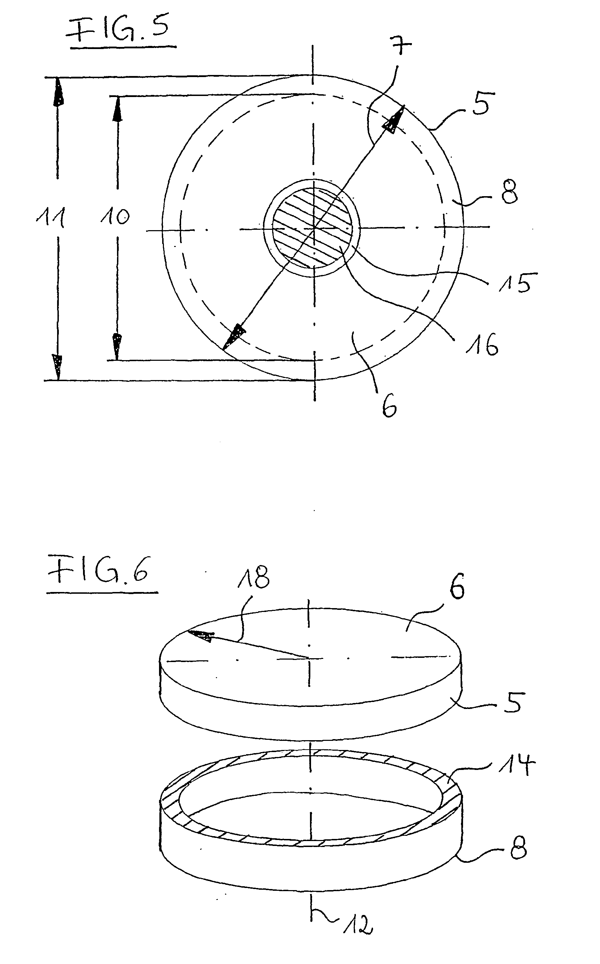

Fig. 4 zeigt im Schnitt die Ausführungsform nach Fig. 1 im montierten Zustand zweier dünnwandiger Bauteile 2a, 2b. In dieser Figur ist gut erkennbar, wie aufgrund der verhältnismäßig großzügigen Auflagefläche 6 in vorteilhafter Weise eine Montage von Bauteilen 2a, 2b mit Lochversatz nicht zwingend ausgeschlossen ist.

Fig. 5 zeigt eine Schnittansicht des in Fig. 2 dargestellten Befestigungselementes. Das dargestellte Basisteil 5 weist dabei eine Auflagefläche 6 mit einem vorgebbaren Durchmesser 7 auf. Gestrichelt ist die Befestigungsfläche 8 dargestellt, welche einen Innendurchmesser 10 und einen Außendurchmesser 11 hat. Der Außendurchmesser 11 der Befestigungsfläche 8 entspricht dabei dem Durchmesser 7 der Auflagefläche 6. Der Innendurchmesser 10 ist so zu wählen, dass eine Befestigungsfläche 8 definiert wird, die vorzugsweise kleiner als 65% der Auflagefläche 6 ausgeführt ist. Im Zentrum ist der Schaft 9 (nicht dargestellt) mit seiner Stoßfläche 16 in einer Ausnehmung 15 des Basisteils 5 angeordnet. Die Stoßfläche 16 beträgt dabei vorzugsweise weniger als 40% der Auflagefläche 6.

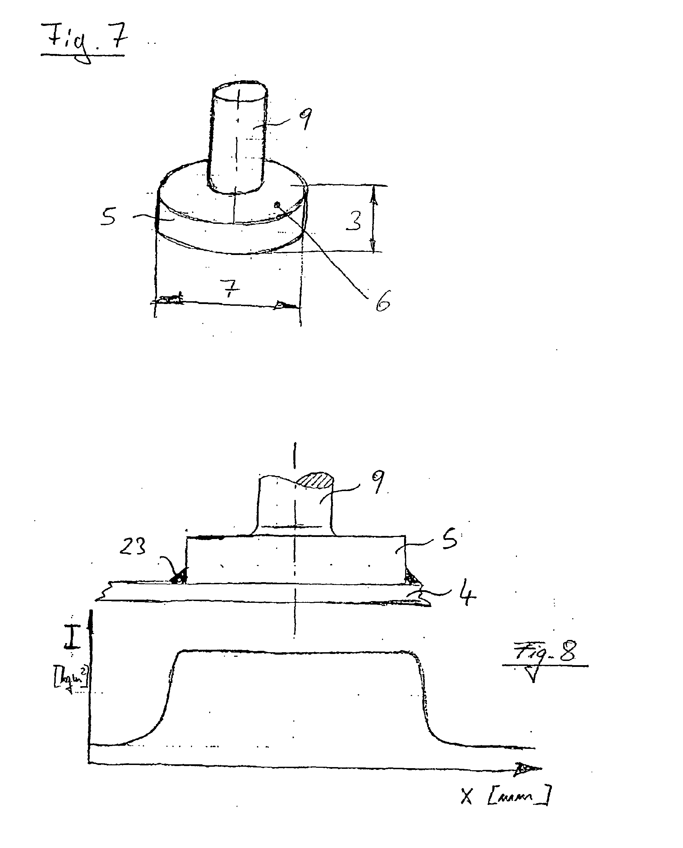

Fig. 6 zeigt schematisch und perspektivisch einen Schnitt durch eine Ausführungsform des Basisteils 5. Daraus lässt sich erkennen, dass das Basisteil 5 einen rohrähnlichen Abschnitt mit einem reduzierten Querschnitt 14 und einen scheibenförmigen Abschnitt mit der Auflagefläche 6 aufweist. Der Auflagefläche 6 gegenüber angeordnet ist die Befestigungsfläche 8. Das Basisteil 5 ist rotationssymmetrisch zu der Achse 12 aufgebaut, wobei senkrecht zu der Achse 12 der Radius 18 verläuft.

Fig. 7 zeigt schematisch in eine perspektivische Darstellung des Befestigungselementes 1 in einem nicht montierten Zustand. Deutlich erkennbar ist insbesondere die vorteilhafte Auflagefläche 6. Der Schaft 9 ist vorzugsweise und je nach Anwendungsfall korrespondierend zu Muttern 19, Clipse, Klammern oder entsprechenden Befestigungselementen ausgebildet.

Fig. 8 zeigt schematisch in einem Diagramm den Steifigkeitsverlauf I über den Querschnitt eines umlaufend angeschweißten Befestigungselementes 1. Insbesondere bei Anwendung auf dünne Trägerteile 4 erfolgt in vorteilhafter Weise eine Versteifung der vorzugsweise umlaufenden Schweißstelle 23.

Das erfindungsgemäße Befestigungselement 1 eignet sich bevorzugt zur Fixierung wenigstens eines, ggf. auch dünnwandigen, Bauteils 2 in einem vorgebbaren Abstand 3 zu einem Trägerteil 4, insbesondere bei der Ausführung des Trägerteils 4 aus einem metallischen Material. Das Trägerteil 4 stellt dabei beispielsweise eine Behälterwand oder ein Karosseriebauteil dar.

### Bezugszeichenliste

- 1: Befestigungselement
- 2, 2a, 2b: Flächenförmiges Bauteil
- 3: Abstand
- 4: Trägerteil
- 5: Basisteil
- 6: Auflagefläche
- 7: Durchmesser
- 8: Befestigungsfläche
- 9: Schaft
- 10: Innendurchmesser
- 11: Außendurchmesser
- 12: Achse
- 13: Höhe
- 14: Querschnittsfläche
- 15: Ausnehmung
- 16: Stoßfläche
- 17: Erhebung
- 18: Radius
- 19: Mutter
- 20: Hohlraum
- 21: Kante
- 22: Unterlegscheibe
- 23: Schweißstelle

## Patentansprüche

1. Befestigungselement (1), insbesondere zur Fixierung wenigstens eines flächenförmigen Bauteils (2) in einem Abstand (3) zu einem Trägerteil (4), umfassend ein Basisteil (5), welches eine Auflagefläche (6) und eine Befestigungsfläche (8) hat, und einen Schaft (9), der an der Auflagefläche (6) des Basisteils (5) angeordnet und zur Fixierung des flächenförmigen Bauteils (2) geeignet ist, **dadurch gekennzeichnet, dass** die Befestigungsfläche (8) kleiner als die Auflagefläche (6) ist.

2. Befestigungselement (1) nach Anspruch 1, **dadurch gekennzeichnet, dass** die Auflagefläche (6) rotationssymmetrisch mit einem Durchmesser (7) und die Befestigungsfläche (8) ringförmig ausgeführt ist.

3. Befestigungselement (1) nach Anspruch 2, **dadurch gekennzeichnet, dass** die ringförmige Befestigungsfläche (8) einen Innendurchmesser (10) und einen Außendurchmesser (11) aufweist, wobei der Außendurchmesser (11) dem Durchmesser (7) der Auflagefläche (6) entspricht.

4. Befestigungselement (1) nach Anspruch 1, **dadurch gekennzeichnet, dass** die Befestigungsfläche (8) als ein Polygon ausgeführt ist.

5. Befestigungselement (1) nach einem der Ansprüche 1 bis 4, **dadurch gekennzeichnet, dass** die Befestigungsfläche (8) kleiner als 80%, insbesondere kleiner als 70 %, bevorzugt kleiner 65 % der Auflagefläche (6) ausgeführt ist.

6. Befestigungselement (1) nach einem der Ansprüche 1 bis 5, **dadurch gekennzeichnet, dass** das Basisteil (5) in Richtung einer Achse (12) eine Höhe (13) hat, die zwischen 3 und 10 mm beträgt.

7. Befestigungselement (1) nach einem der Ansprüche 1 bis 6, **dadurch gekennzeichnet, dass** das Basisteil (5) in Richtung einer Achse (12) eine Höhe (13) hat und das Basisteil (5) ausgehend von der Befestigungsfläche (8) über mindestens 20%, insbesondere mindestens 40%, bevorzugt mindestens 50% der Höhe (13) eine Querschnittsfläche (14) aufweist, die kleiner als die Auflagefläche (6) ist.

8. Befestigungselement (1) nach einem der Ansprüche 1 bis 7, **dadurch gekennzeichnet, dass** das Befestigungselement (1) modular, insbesondere zweistückig (5, 9), aufgebaut ist.

9. Befestigungselement (1) nach Anspruch 8, **dadurch gekennzeichnet, dass** Mittel zur Positionierung des Schaftes (15) auf der Auflagefläche (6) des Basisteils (5) vorgesehen sind, und der Schaft (9) mit dem Basisteil (5) vorzugsweise fügetechnisch verbunden ist.

10. Befestigungselement (1) nach einem der Ansprüche 1 bis 9, **dadurch gekennzeichnet, dass** der Schaft (9) eine Stoßfläche (16) aufweist, die kleiner als 50%, insbesondere kleiner 45%, bevorzugt kleiner 40% der Auflagefläche (6) ist.

11. Befestigungselement (1) nach einem der Ansprüche 1 bis 10, **dadurch gekennzeichnet, dass** der Schaft (9) Mittel zur Fixierung (17) eines flächenförmigen Bauteils (2) hat.

12. Befestigungselement (1) nach Anspruch 11, **dadurch gekennzeichnet, dass** der Schaft (9) mindestens eine Erhebung (17) aufweist, die sich zumindest teilweise radial (18) auswärts erstreckt, wobei die mindestens eine Erhebung (17) vorzugsweise umlaufend als Raststufe oder Gewinde ausgeführt ist.

13. Verfahren zur Herstellung eines Befestigungselementes (1) nach einem der Ansprüche 1 bis 12, **dadurch gekennzeichnet, daß** zunächst das Basisteil (5) mit der Auflagefläche (6) und der im Vergleich zu dieser kleineren Befestigungsfläche (8) nach einem urformenden oder umformenden und/oder einem spanenden Fertigungsverfahren hergestellt und der Schaft (9) anschließend mit der Auflagefläche (6) des Basisteils (5) fügetechnisch verbunden, insbesondere verschweißt, wird.

14. Verfahren zur Herstellung eines Befestigungselementes (1) nach einem der Ansprüche 1 bis 12, bei dem das Befestigungselement (1) insgesamt mit einem urformenden oder umformenden und/oder einem spanenden Fertigungsverfahren hergestellt wird.

15. Verwendung eines Befestigungselements (1) nach einem der vorherigen Ansprüche zur Fixierung wenigstens eines Bauteils (2; 2a, 2b) in einem vorgebbaren Abstand (3) zu einem Trägerteil (4), insbesondere eines metallischen Trägerteils (4), vorzugsweise einer Behälterwand oder eines Karosseriebauteils.

## Claims

1. A fastener (1) particularly for fixing at least one flat component (2) at a spacing (3) from a carrier member (4), comprising a base member (5) which has a supporting face (6) and a fastening face (8), and a shank (9) which is arranged on the supporting face (6) of the base member (5) and is suitable for fixing the flat component (2), **characterised in that** the fastening face (8) is smaller than the supporting face (6).

2. A fastener (1) according to claim 1, **characterised in that** the supporting face (6) is rotationally symmetrical with a diameter (7) and the fastening face (8) is of annular design.

3. A fastener (1) according to claim 2, **characterised in that** the annular fastening face (8) has an internal diameter (10) and an external diameter (11), the external diameter (11) being equal to the diameter (7) of the supporting face (6).

4. A fastener (1) according to claim 1, **characterised in that** the fastening face (8) is polygonal.

5. A fastener (1) according to any of claims 1 to 4, **characterised in that** the fastening face (8) is smaller than 80%, particularly smaller than 70% and preferably smaller than 65% of the supporting face (6).

6. A fastener (1) according to any of claims 1 to 5, **characterised in that** the base member (5) has a height of between 3 and 10 mm in the direction of an axis (12).

7. A fastener (1) according to any of claims 1 to 6, **characterised in that** the base member (5) has a height (13) in the direction of an axis (12) and, starting from the fastening face (8), the base member (5) has a cross-sectional area (14) smaller than the supporting face (6) over at least 20%, particularly at least 40% and preferably at least 50% of the height (13).

8. A fastener (1) according to any of claims 1 to 7, **characterised in that** the fastener (1) is of modular, particularly two-part (5, 9) construction.

9. A fastener (1) according to claim 8, **characterised in that** means are provided for positioning the shank (15) on the supporting face (6) of the base member (5), and the shank (9) is connected to the base member (5) preferably by a jointing technique.

10. A fastener (1) according to any of claims 1 to 9, **characterised in that** the shank (9) has an abutting face (16) which is smaller than 50%, particularly smaller than 45% and preferably smaller than 40% of the supporting face (6).

11. A fastener (1) according to any of claims 1 to 10, **characterised in that** the shank (9) has means for fixing (17) a flat component (2).

12. A fastener (1) according to claim 11, **characterised in that** the shank (9) has at least one raised portion (17) extending at least partly radially (18) outwards, the at least one raised portion (17) preferably being shaped peripherally as a latching step or screw thread.

13. A method of producing a fastener (1) according to any of claims 1 to 12, **characterised in that** first the base member (5) with the supporting surface (6) and the fastening face (8) which is smaller in comparison to said base member is produced by a primary shaping or re-shaping and/or a machining process and the shank (9) is then connected to the supporting face (6) of the base member (5) by a jointing technique, particularly welding.

14. A method of producing a fastener (1) according to any of claims 1 to 12, wherein the entire fastener (1) is made by a primary shaping or re-shaping and/or a machining production process.

15. The use of a fastener (1) according to any of the preceding claims for fixing at least one component (2; 2a,2b) with a predeterminable spacing (3) to a carrier member (4), particularly a metallic carrier member (4), preferably a container wall or a vehicle body component.

## Revendications

1. Elément de fixation (1), notamment pour la fixation d'au moins un composant de forme plate (2) à une distance (3) d'un élément de support (4), comprenant une partie de base (5), qui possède une surface d'appui (6) et une surface de fixation (8), et une tige (9), qui est montée sur la surface d'appui (6) de la partie de base (5) et est appropriée pour la fixation du composant de forme plate (2), **caractérisé en ce que** la surface de fixation (8) est plus petite que la surface d'appui (6).

2. Elément de fixation (1) selon la revendication 1, **caractérisé en ce que** la surface d'appui (6) est réalisée de manière à présenter une symétrie de révolution avec un diamètre (7) et la surface de fixation (8) est réalisée avec une forme annulaire.

3. Elément de fixation (1) selon la revendication 2, **caractérisé en ce que** la surface de fixation de forme annulaire (8) possède un diamètre intérieur (10) et un diamètre extérieur (11), le diamètre extérieur (11) correspondant au diamètre (7) de la surface d'appui (6).

4. Elément de fixation (1) selon la revendication 4, **caractérisé en ce que** la surface de fixation (8) est agencée sous la forme d'un polygone.

5. Elément de fixation (1) selon l'une des revendications 1 à 4, **caractérisé en ce que** la surface de fixation (8) est inférieure à 80 % et notamment inférieure à 70 % et de préférence inférieure à 65 % de la surface de base (6).

6. Elément de fixation (1) selon l'une des revendications 1 à 5, **caractérisé en ce que** la partie de base (5) possède dans la direction de l'axe (12) une hauteur (13) qui est comprise entre 3 et 10 mm.

7. Elément de fixation (1) selon l'une des revendications 1 à 6, **caractérisé en ce que** la partie de base (5) possède dans la direction d'un axe (12) une hauteur (13) et que la partie de base possède, à partir de la surface de fixation (8) et sur au moins 20 %, notamment au moins 40 % et de préférence au moins 50 % de la hauteur (13), une surface de coupe transversale (14), qui est plus petite que la surface d'appui (6).

8. Elément de fixation (1) selon l'une des revendications 1 à 7, **caractérisé en ce que** l'élément de fixation (1) est agencé de façon modulaire et notamment est formé de deux éléments (5, 9).

9. Elément de fixation (1) selon la revendication 8, **caractérisé en ce que** des moyens sont prévus pour le positionnement de la tige (15) sur la surface d'appui (6) de la partie de base (5), et que la tige (9) est reliée à la partie de base (5) de préférence selon une technique d'assemblage.

10. Elément de fixation (1) selon l'une des revendications 1 à 9, **caractérisé en ce que** la tige (9) possède une surface d'aboutement (16), qui est inférieure à 50 %, notamment est inférieure à 45 % et de préférence est inférieure à 40 % de la surface d'appui (6).

11. Elément de fixation (1) selon l'une des revendications 1 à 10, **caractérisé en ce que** la tige (9) comporte des moyens de fixation (17) d'un composant de forme plate (2).

12. Elément de fixation (1) selon la revendication 11, **caractérisé en ce que** la tige (9) possède au moins une partie surélevée (17), qui s'étend au moins partiellement radialement (18) vers l'extérieur, la au moins une partie surélevée (17) étant réalisée de préférence circonférentiellement sous la forme d'une partie étagée d'encliquetage ou sous la forme d'un filetage.

13. Procédé pour fabriquer un élément de fixation (1) selon l'une des revendications 1 à 12, **caractérisé en ce qu'**on réalise au moins la partie de base (5) pourvue de la surface d'appui (6) et de la surface de fixation (8) comparativement plus petite que la surface d'appui, selon un procédé de fabrication avec mise en forme d'origine ou avec formage et/ou avec enlèvement de copeaux et que la tige (9) est ensuite reliée selon une technique d'assemblage, notamment par soudage, à la surface d'appui (6) de la partie de base (5).

14. Procédé pour fabriquer un élément de fixation (1) selon l'une des revendications 1 à 13, selon lequel l'élément de fixation (11) est fabriqué globalement avec un procédé de fabrication avec un formage de départ ou avec déformation et/ou avec enlèvement de copeaux.

15. Utilisation d'un élément de fixation (1) selon l'une des revendications précédentes, pour la fixation d'au moins un composant (2; 2a, 2b) à une distance pouvant être prédéterminée (3) d'une partie de support (4), notamment d'une partie de support métallique (4), de préférence la paroi du récipient ou un composant de carrosserie.
